# EUROPEAN PATENT SPECIFICATION

(11) **EP 1 921 737 B1**
(45) Date of publication and mention of the grant of the patent: **21.12.2016**
(21) Application number: 08002429.2
(22) Date of filing: 13.03.2001
(51) Int. Cl.: H02M 1/42, F25B 9/00

(54) **Single-Phase converter circuit, converter apparatus and the refrigeration cycle apparatus**
Einphasenwandlerschaltung, Wandlergerät und Kältekreislaufgerät
Circuit convertisseur à phase unique, appareil convertisseur et appareil de cycle de réfrigération

(30) Priority: 27.03.2000 JP 2000086329; 31.03.2000 JP 2000099671
(43) Date of publication of application: 14.05.2008
(62) Divisional of application: 01912304.1
(73) Proprietor: Mitsubishi Denki Kabushiki Kaisha, Chiyoda-ku Tokyo 100-8310 (JP)
(72) Inventor: Amano, Katsuyuki, Chiyoda-ku Tokyo 100-8310 (JP); Saitou, Katsuhiko, Chiyoda-ku Tokyo 100-8310 (JP); Sakamoto, Hirotaka, Chiyoda-ku Tokyo 100-8310 (JP)
(74) Representative: Mounteney, Simon James

(56) References cited:
- EP-A- 0 866 284
- JP-A- 8 189 711
- JP-A- 11 325 621
- JP-A- 56 150 972
- JP-A- 61 112 572
- US-A- 4 029 999

## Description

The present invention relates to a single-phase converter circuit for conducting AC-DC conversion. In particular, the present invention relates to a single-phase converter circuit for conducting power factor improvement, suppression of power source harmonics, DC voltage adjustment, or the like. In addition, the present invention relates to a converter apparatus and a refrigeration cycle apparatus for conducting suppression of harmonics and power factor improvement by using semiconductor switching elements.

As conventional single-phase converters, there are, for example, single-phase half bridge converter circuits, such as "sine wave input single-phase rectifier circuit" disclosed in Japanese Patent Application Laid-Open No. 10-337034, "rectifier circuit" disclosed in Japanese Utility Model Application Laid-OpenNo. 64-50686, and "power supply apparatus using PWM control" disclosed in Japanese Patent Application Laid-Open No. 2-237469. Fig. 15 is a diagram showing a configuration of such a conventional single-phase half bridge converter circuit. In this half bridge converter, four diodes 54a to 54d are bridge-connected to form the capacitor input rectifier circuit. The reactor 53 is connected to one of AC side input lines of the capacitor input rectifier circuit. Semiconductor switching elements 55a and 55b are provided in parallel with the diodes 54c and 54d so as to be opposite in polarity to the diodes 54c and 54d.

AC voltage input from the AC power source 51 via the noise filter 52 is converted to DC voltage. The semiconductor switching elements 55a and 55b are PWM-driven by using the current transformer ("CT") 56, desired output voltage 58, output voltage error amplifier 59, power source synchronization circuit 60, multiplier 61, current error amplifier 62, triangular wave 63, comparator 64, and the semiconductor switching element PWM drive circuit 65. Thus, power factor improvement, power source harmonic suppression, DC voltage adjustment, and so on are conducted. Detection of an input current, which is one of control parameters to be used when PWM driving the semiconductor switching elements 55a and 55b, is conducted by the CT 56 provided on an AC side input line.

In this single-phase half bridge converter circuit, switching speed of the semiconductor switching elements 55a and 55b is fast, and the voltage and current changes become steep. Furthermore, in order to reduce the size of the reactor 53, PWM switching is caused by a high frequency carrier having a carrier frequency of at least 20 kHz. Due to influences of such high dV/dt and wiring impedance, there is a fear that common system noise of approximately several hundreds kHz to one hundred and several tens MHz is caused and the noise exerts a bad influence upon other devices. In application to home electric appliances such as air conditioners, there are regulations by laws on noise of the common system such as the noise terminal voltage, and the noise needs to be suppressed so as not to exceed a predetermined reference. In the conventional single-phase half bridge converter circuit, therefore, the large-sized noise filter 52 is provided to suppress the noise of the common system.

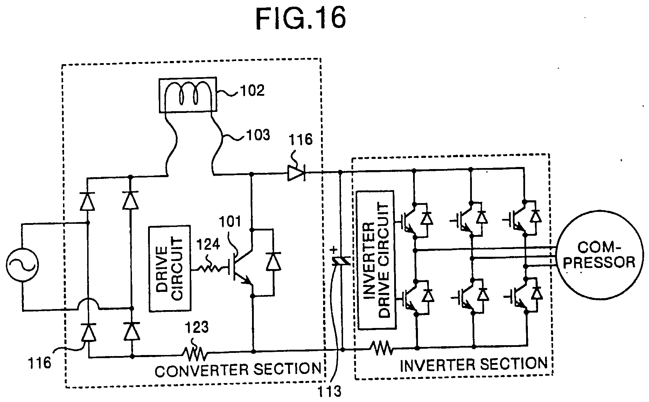

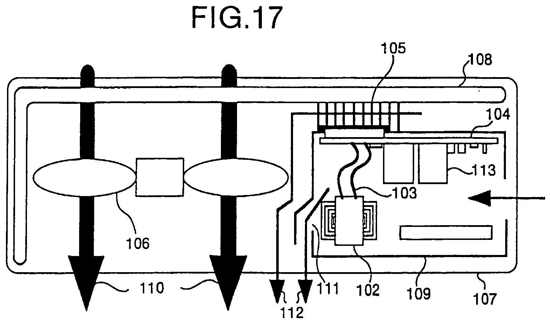

How the reactor is mounted and how it is cooled, in the conventional converter apparatus, will now be explained by referring to Fig. 16 and Fig. 17. Fig. 16 is a simplified circuit diagram of a conventional air conditioner having a converter apparatus for conducting harmonic suppression and power factor improvement by using semiconductor switching elements. Fig. 17 illustrates a reactor mounting state of a converter apparatus in the conventional air conditioner, and it is a sectional view of an outdoor machine of the air conditioner seen from the above.

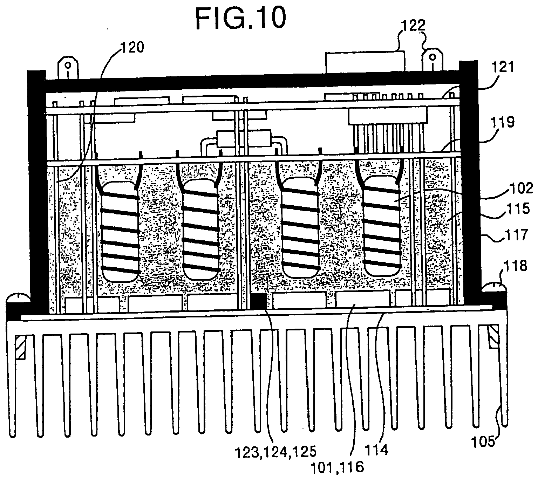

In Fig. 16, 10 denotes a semiconductor switching element, 102 a reactor for suppressing the harmonics and improving the power factor, 103 a lead wire for electrically connecting the reactor 102 to a main circuit board 104, 113 an electrolytic capacitor, 116 a diode, 123 a shunt resistor, and 124 a gate resistor. In Fig. 17, 105 denotes a radiator attached to the main circuit board 104 to prompt radiation from heat generating components mounted on the board, 106 an outdoor fun, 107 an outdoor machine, 108 a heat exchanger disposed on an upstream side of the outdoor funs 106 in the outdoor machine 107, 109 an electric component box incorporating the main circuit board 104 and the reactor 102, 110 a direct wind from each of the outdoor fans 106, 111 a ventilation hole formed in the electric component box, and 112 a slight wind that flows due to a pressure difference.

As for the reactor 102 of the power factor improving converter circuit of the air conditioner represented by the simplified circuit diagram of Fig. 16, a large current of approximately up to 30 A in peak is flown through the reactor 102 by a compressor motor driven by an inverter. Therefore, the size and the amount of generated heat of the reactor 102 are large, and the weight thereof also becomes large. As a result, the reactor 102 cannot be mounted on the main circuit board 104, and the reactor 102 is electrically connected to the main circuit board 104 having electronic components, such as the semiconductor switching element 101 and the electrolytic capacitor 113, mounted thereon, via the lead wires 103. Furthermore, unlike the semiconductor switching element 101, the reactor 102 is not connected to the radiator 105. Therefore, the reactor 102 is naturally cooled in such a place that a slight wind 112 flown by the outdoor fans 106 of the outdoor machine 107 and a pressure difference, such as the vicinity of the ventilation hole 111.

In the above described conventional technique, however, the cost is high and the housing size is large. In addition, the input current is detected by the CT 56 mounted on a main power source section, which requires a wide wiring pattern. Even in the case where reduction of the board size of an apparatus using a single-phase converter circuit is demanded, therefore, there occurs a problem that the board size cannot be made small and the cost increases. Furthermore, since a large sized noise filter having a high cost is used in order to suppress the common system noise, there is a problem that the board size cannot be made small and the cost increases.

Furthermore, since the conventional reactor of the converter apparatus generates a large amount of heat, there is a constraint on the structure design that it is necessary to secure a ventilation path and dispose the reactor in such a place that ventilation can be easily obtained. As shown in Fig. 17, the outdoor machine of the air conditioner has such a configuration that the outdoor fans 106 and the electric component box 109, which houses the reactor 102 and the main circuit board 104, are disposed side by side inside the heat exchanger 108. Therefore, it is difficult to obtain the direct winds 110 from the outdoor fans 106. In addition, the electric component box 109 has the ventilation hole 111 having a narrow shape as shown in Fig. 17 in order to minimize the entry of dust and moisture. Therefore, the reactor 102 can obtain only slight ventilation flown by the pressure difference.

For such a device that a controller must be incorporated into a narrow electric component box, such as an air conditioner, therefore, there are a constraint of the reactor in structure design that the size is large and the reactor can be placed quite near the ventilation hole, and a problem of a temperature rise in the electric component box, hastened degradation of components such as the electrolytic capacitor on a control board, and a shortened product life. It is also conceivable to mount the reactor outside the electric component box and thereby suppress the temperature rise in the box. However, there is a problem of lengthened lead wires, aggravated working dispersion and productivity, and susceptibility to exposure of a high voltage portion to dust and moisture.

Furthermore, in the power factor improving converter apparatus represented by the circuit shown in Fig. 17, the semiconductor switching element 101 is PWM-controlled with a high frequency carrier (of approximately 20 kHz). Therefore, the current and voltage changes become steep, and high frequency voltage vibration is caused. This is radiated into the space by using a circuit loop as an antenna. If the lead wires 103 become long, therefore, then there occurs a problem that the antenna becomes large and the amount of radiated noise increases. Especially in the case where a substitute coolant, such as R407C or R410A, which is higher in pressure than R22 is used, the power input of the compressor becomes large and this results in a problem that the problem of the radiated noise becomes remarkable.

Therefore, an object of the present invention is to provide a single-phase converter circuit that can be reduced in size of the board and that can be reduced in cost.

Another object of the present invention is to provide such a converter apparatus and a refrigeration cycle apparatus that can be reduced in reactor size enough to be mounted on the board by dividing the reactor into parts and connecting the parts in parallel, that can be relaxed in constraint on arrangement and structure and suppressed in temperature rise in the electric component box by positively radiating heat with a radiator, and that can be reduced in working dispersion and radiated noise by shortening the lead wires or eliminating the lead wires.

JP56150972 discloses a refrigeration cycle apparatus according to the preamble of claim 1.

According to the present invention there is provided a refrigeration cycle apparatus as claimed in claim 1.

The single-phase converter circuit may comprise a bridge circuit formed by connecting four rectifiers; a current detector provided between the bridge circuit and a negative side output terminal; a first switching element connected in parallel with the current detector and one of the rectifiers of a side to which the current detector is connected; a second switching element connected in parallel with the current detector and the other of the rectifier of 3033215-1-tprock a side to which the current detector is connected; and a control unit which controls current detection by the current detector and controls the switching elements.

The current detector may be provided between a bridge circuit and a negative side output terminal. The control unit controls the current transformer (CT) so as not conduct current detection, and controls the small-sized inexpensive current detector so as to conduct current detection. By using a result of this detection as one of control parameters, the switching elements are controlled to conduct power factor improvement, power supply harmonic suppression, DC voltage adjustment, and so on.

In the single-phase converter circuit the two switching elements, i.e., the first switching element and the second switching element may be simultaneously switched.

If the two switching elements are simultaneously switched the power factor becomes approximately unity. In addition, the actual output voltage becomes desired output voltage.

The single-phase converter circuit may further comprise two reactors respectively provided on two AC side input lines.

According to the above invention, two reactors respectively provided on two AC side input lines suppress common system noise. As a result, the noise filter can be made small-sized and inexpensive.

The two reactors share a core. As a result, only one shared core is needed. In addition, as compared with the case where two separate reactor having no interlinkage in magnetic flux are provided, the total inductance can be increased and the number of turns can be decreased.

The bridge circuit, the first switching element, and the second switching element may be molded with insulating resin and integrated into one module. As a result, the board size can be further reduced.

Two reactors sharing a core are provided respectively on two AC side input lines and common system noise is suppressed. As a result, the noise filter can be made small-sized and inexpensive by using small-sized reactor.

Furthermore, in the converter apparatus for conducting suppression of harmonics and power factor improvement by using semiconductor switching elements, reactors used for suppression of harmonics and power factor improvement are disposed on or near a thermal conductive board having semiconductor elements mounted thereon and having a radiator, a space between the reactors and the thermal conductive board is filled with a substance such as resin or gel having high thermal conductivity and insulation property, and thereby the reactors are cooled by means of thermal conduction by the radiator for cooling the semiconductor elements.

The reactors may include parallel connection of at least two reactors.

A material for improving the thermal conductivity may be mixed into a substance such as resin or gel having high thermal conductivity and provided with insulation property.

An EMC countermeasure material can be mixed into a substance such as resin or gel having high thermal conductivity and provided with insulation property.

A temperature detection unit may be provided on a thermal conductive board having semiconductor elements mounted thereon.

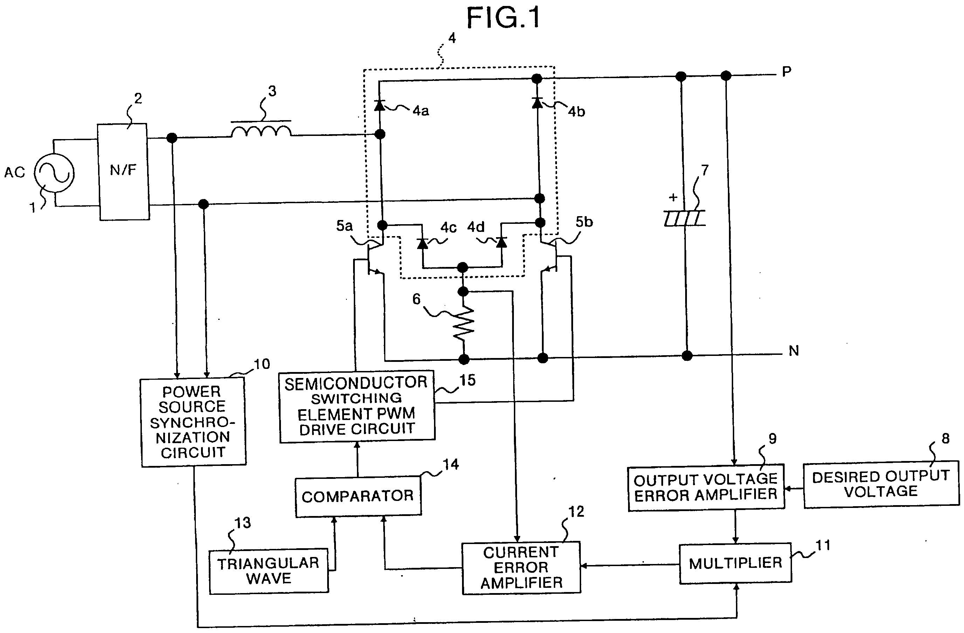

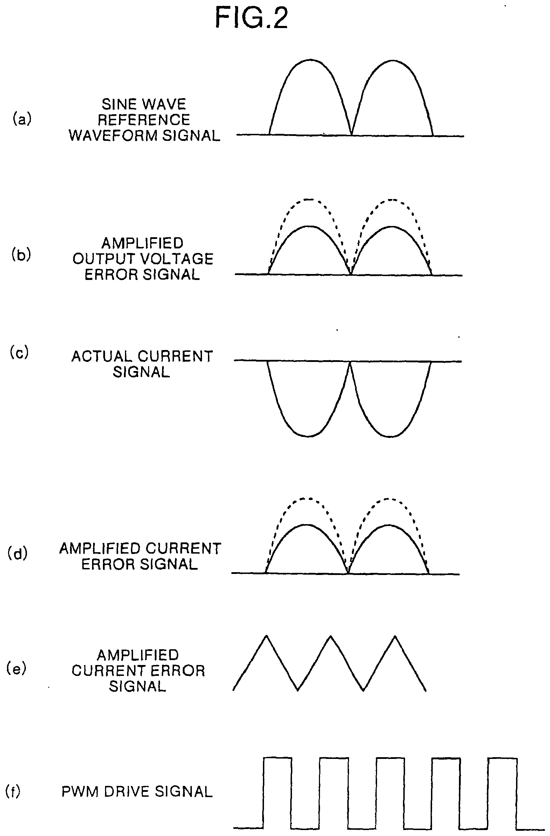

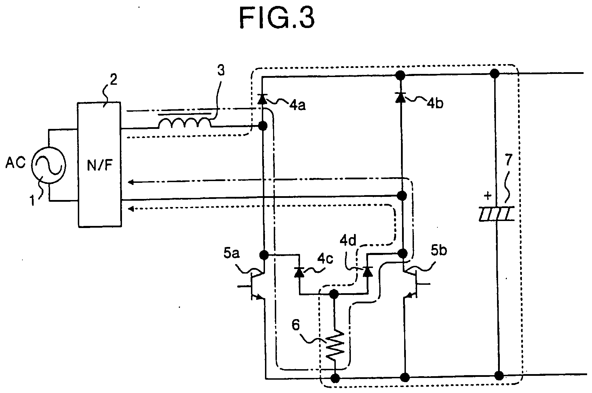

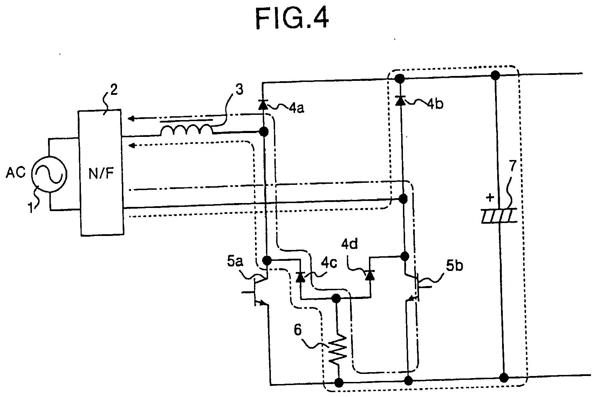

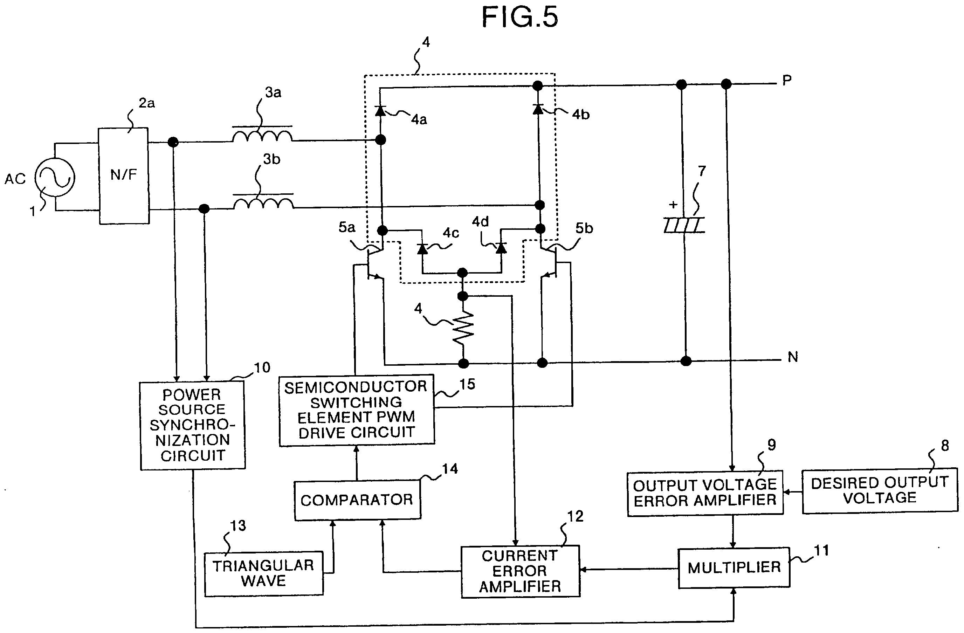

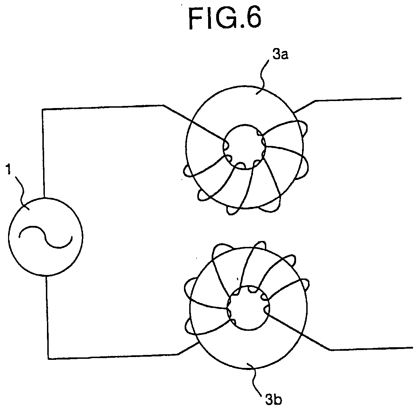

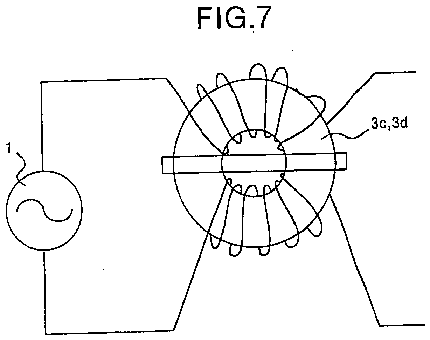

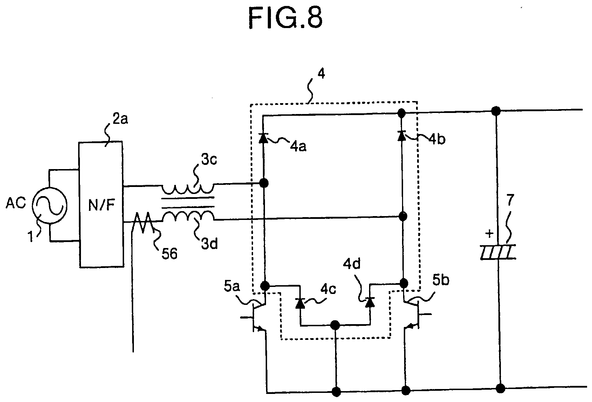

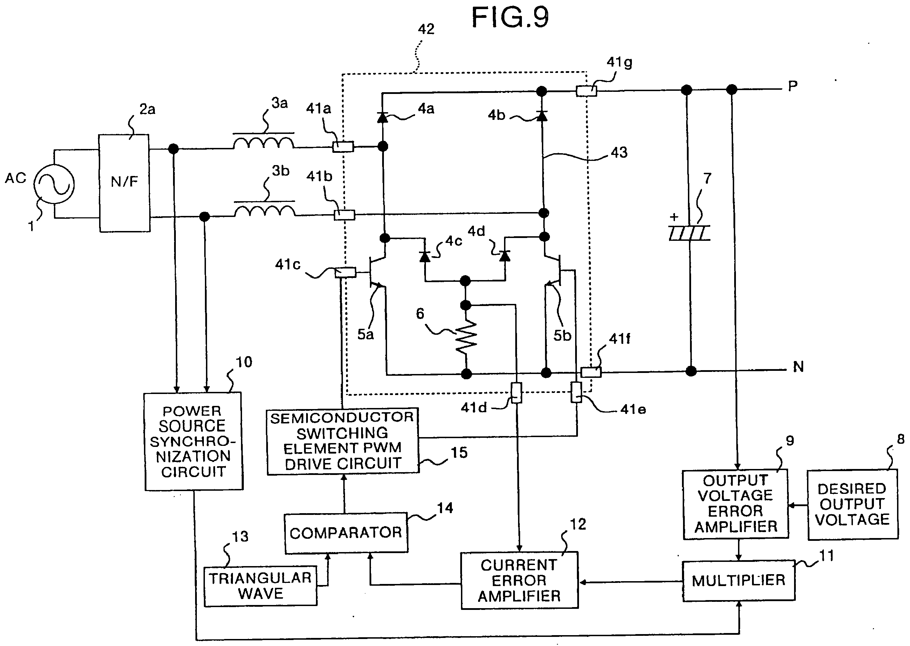

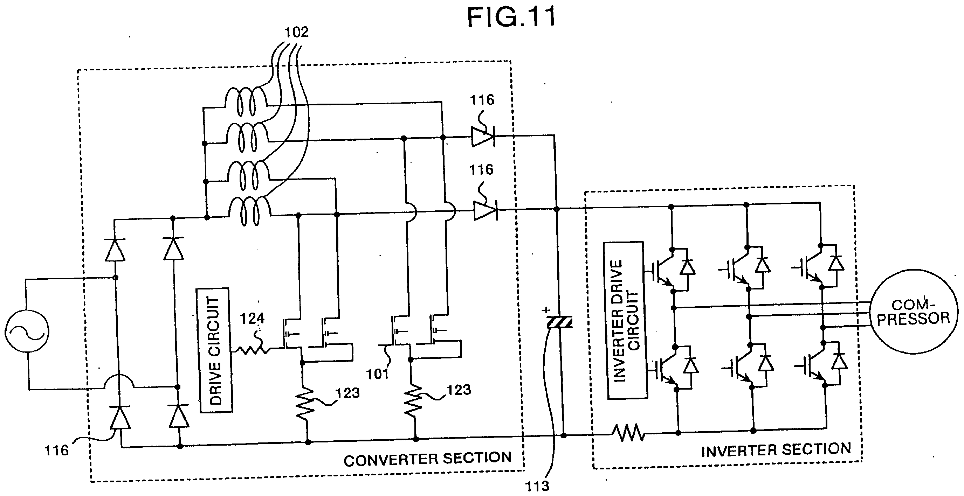

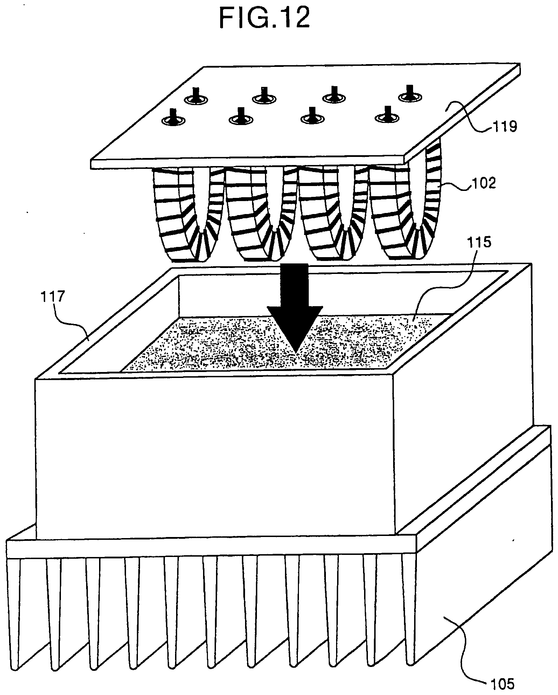

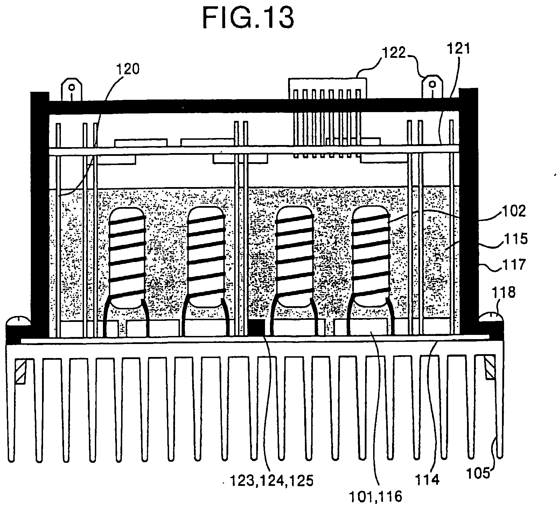

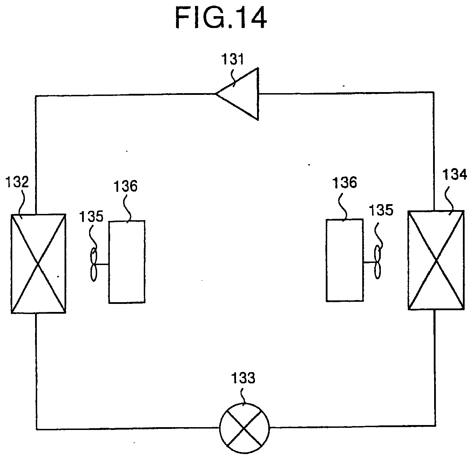

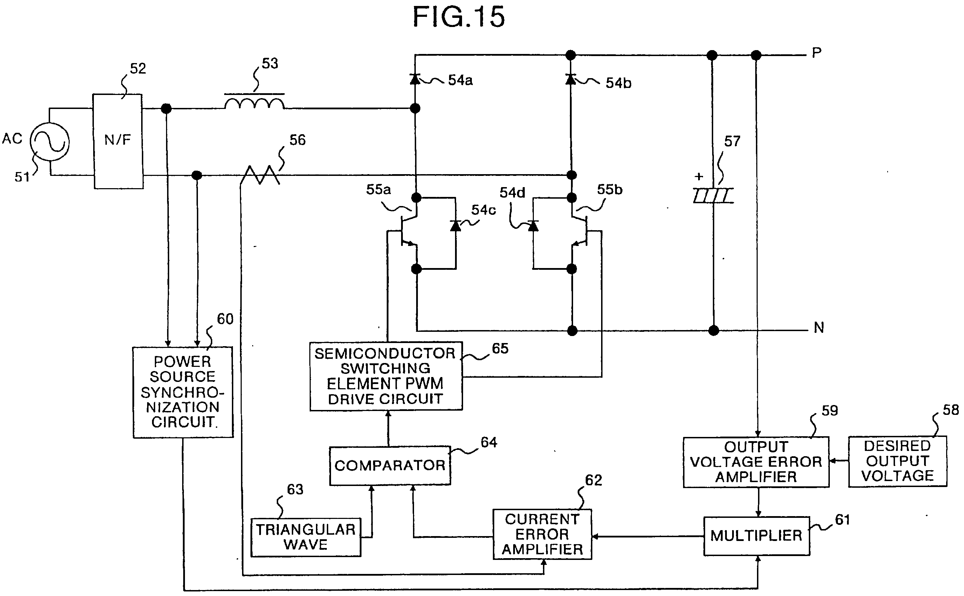

Fig. 1 is a diagram showing a configuration of a first single-phase half bridge converter circuit arrangement not in accordance with the present invention; Fig. 2 is a diagram showing operation of a single-phase half bridge converter circuit; Fig. 3 is a diagram showing a current flow of a single-phase half bridge converter circuit not in accordance with the present invention; in the case where an AC power supply voltage is positive; Fig. 4 is a diagram showing a current flow of a single-phase half bridge converter circuit not in accordance with the present invention, in the case where the AC power source voltage is negative; Fig. 5 is a diagram showing a configuration of a single-phase half bridge converter circuit according to an embodiment of the present invention; Fig. 6 is a diagram showing a configuration of a reactor not in accordance with the present invention shown in Fig. 5; Fig. 7 is a diagram showing another configuration of a reactor according to an embodiment; Fig. 8 is a diagram showing a configuration of another single-phase half bridge converter circuit according to an embodiment; Fig. 9 is a diagram showing a configuration of a single-phase half bridge converter circuit according to an embodiment of the present invention; Fig. 10 is a schematic sectional view of a converter apparatus; Fig. 11 is a simplified circuit diagram of a converter apparatus according to a fourth embodiment of the present invention; Fig. 12 is an assembly diagram of a converter apparatus according to a fourth embodiment of the present invention; Fig. 13 is a schematic sectional view of a converter apparatus according to a fifth embodiment of the present invention; Fig. 14 is a system concept diagram showing a refrigeration cycle apparatus; Fig. 15 is a diagram showing a configuration of a single-phase half bridge converter circuit in a conventional art; Fig. 16 is a simplified circuit diagram showing a converter apparatus of an air conditioner in a conventional art; Fig. 17 is a diagram showing a reactor mounting state of a converter apparatus of an air conditioner in a conventional art seen from the above of an outdoor machine.

Embodiments of the single-phase converter circuit, converter apparatus, and the refrigeration cycle apparatus according to the present invention will be explained in detail by referring to the accompanying drawing. By the way, the present invention is not limited by the embodiments.

A first single-phase converter circuit arrangement not in accordance with the present invention will now be described by taking a single-phase half bridge converter circuit used in an air conditioner and other home electric appliances as an example. Fig. 1 is a diagram showing a configuration of a single-phase half bridge converter circuit not in accordance with the present invention. The single-phase half bridge converter circuit includes the reactor 3 provided on either R line or S line of the noise filter 2 connected to the AC power source 1; the diode bridge circuit 4 for full-wave rectifying the AC voltage supplied from the noise filter 2 and the reactor 3; and the current detection shunt resistor 6 connected between an output N and the diode bridge circuit 4.
invention; Fig. 14 is a system concept diagram showing a refrigeration cycle apparatus; Fig. 15 is a diagram showing a configuration of a single-phase half bridge converter circuit in a conventional art; Fig. 16 is a simplified circuit diagram showing a converter apparatus of an air conditioner in a conventional art; Fig. 17 is a diagram showing a reactor mounting state of a converter apparatus of an air conditioner in a conventional art seen from the above of an outdoor machine.

### BEST MODE FOR CARRYING OUT THE INVENTION

Embodiments of the single-phase converter circuit, converter apparatus, and the refrigeration cycle apparatus according to the present invention will be explained in detail by referring to the accompanying drawing. By the way, the present invention is not limited by the embodiments.

The single-phase converter circuit according to a first embodiment of the present invention will now be described by taking a single-phase half bridge converter circuit used in an air conditioner and other home electric appliances as an example. Fig. 1 is a diagram showing a configuration of a single-phase half bridge converter circuit according to a first embodiment of the present invention. The single-phase half bridge converter circuit includes the reactor 3 provided on either R line or S line of the noise filter 2 connected to the AC power source 1; the diode bridge circuit 4 for full-wave rectifying the AC voltage supplied from the noise filter 2 and the reactor 3; and the current detection shunt resistor 6 connected between an output N and the diode bridge circuit 4.

Furthermore, the single-phase half bridge converter circuit includes the semiconductor switching element 5a connected in parallel with the current detection shunt resistor 6 and one rectifying element 4c of a side to that the current detection shunt resistor 6 is connected, so as to become opposite in polarity to the rectifying element 4c (so as to flow a current in a sense opposite to that of the rectifying element 4c); the semiconductor switching element 5b connected in parallel with the current detection shunt resistor 6 and the other rectifying element 4d of the side to that the current detection shunt resistor 6 is connected, so as to become opposite in polarity to the rectifying element 4d (so as to flow a current in a sense opposite to that of the rectifying element 4d); the capacitor ("smoothing capacitor") 7 provided between an output P and the output N; the output voltage error amplifier 9 for receiving a desired output voltage 8 and an actual output voltage (voltage of the output P), amplifying a difference between them, and outputting a resultant output voltage error signal; and the power source synchronization circuit 10 for receiving an AC voltage obtained after the noise filter 2, full-wave rectifying the AC voltage, and outputting a resultant sine wave reference waveform signal.

Furthermore, the single-phase half bridge converter circuit includes the multiplier 11 for receiving the output voltage error signal supplied from the output voltage error amplifier 9 and the sine wave reference waveform signal supplied from the power source synchronization circuit 10, multiplying them, and outputting a resultant amplified output voltage error signal; the current error amplifier 12 for receiving an actual current signal generated by flow of an actual current through the current detection shunt resistor 6 and the amplified output voltage error signal supplied from the multiplier 11, comparing them with each other, amplifying an error between them, and outputting an amplified current error signal; the comparator 14 for receiving a triangular wave 13 and the amplified current error signal supplied from the current error amplifier 12, comparing them with each other, and outputting a PWM drive signal; and the semiconductor switching element PWM drive circuit 15 for receiving a PWM drive signal from the comparator 14 and switching (turning on/off) the semiconductor switching elements 5a and 5b according to the PWM drive signal.

The reactor 3 is a coil such as, for example, a toroidal coil. The rector 3 is provided on either the R line of the AC power source or the S line. The diode bridge circuit 4 includes a diode 4a provided between the R line of the AC power source and the output P so as to flow a current in a direction of the output P, a diode 4b provided between the S line of the AC power source and the output P so as to flow a current in the direction of the output P, a diode 4c provided between the R line of the AC power source and the current detection shunt resistor 6 so as to flow a current in the direction of the AC power source, and a diode 4d provided between the S line of the AC power source and the current detection shunt resistor 6 so as to flow a current in the direction of the AC power source.

The current detection shunt resistor 6 is a minute resistor having a resistance value of, for example, approximately 10 m OMEGA , and it is provided between anodes of the diodes 4c and 4d and the output N. All current loops of the single-phase half bridge converter circuit pass through the current detection shunt resistor 6, and the input current of the single-phase half bridge converter circuit is detected as a voltage generated across the current detection shunt resistor 6. The semiconductor switching elements 5a and 5b are transistors, such as, for example, insulated gate bipolar transistors (IGBTs). The semiconductor switching element 5a is connected in parallel with the current detection shunt resistor 6 and one rectifying element 4c of the side to that the current detection shunt resistor 6 is connected, so as to flow a current in the direction of the output N.

The semiconductor switching element 5b is connected in parallel with the current detection shunt resistor 6 and the other rectifying element 4d of the side to that the current detection shunt resistor 6 is connected, so as to flow a current in the direction of the output N. The smoothing capacitor 7 is provided between the output P and the output N to smooth the current. The output voltage error amplifier 9 receives the desired output voltage 8 previously set and the actual output voltage (voltage of the output P), amplifies the difference between them, and outputs the output voltage error signal. The power source synchronization circuit 10 receives the AC voltage obtained after the noise filter 2, full-wave rectifies the AC voltage, and outputs a resultant sine wave reference waveform signal.

The multiplier 11 receives the output voltage error signal supplied from the output voltage error amplifier 9 and the sine wave reference waveform signal supplied from the power source synchronization circuit 10, multiplies them, and outputs a resultant amplified output voltage error signal. In the amplified output voltage error signal, the amplitude of its sine wave corresponds to the output voltage error. The current error amplifier 12 receives the actual current signal converted into a voltage and detected by the current detection shunt resistor 6 and the amplified output voltage error signal supplied from the multiplier 11, compares them with each other, amplifies the error between them, and outputs the amplified current error signal.

The comparator 14 receives the triangular wave 13 and the amplified current error signal supplied from the current error amplifier 12, compares them with each other, and outputs a PWM drive signal having, for example, a carrier frequency of 20 kHz. The semiconductor switching element PWM drive circuit 15 receives the PWM drive signal from the comparator 14 and switches (turns on/off) the semiconductor switching elements 5a and 5b according to the PWM drive signal. Since the noise filter 2 is a technique well known to those skilled in the art, description thereof will be omitted. By the way, the power source synchronization circuit 10, the output voltage error amplifier 9, the multiplier 11, the current error amplifier 12, the comparator 14, and the semiconductor switching element PWM drive circuit 15 correspond to control unit of the present invention.

In the configuration heretofore described operation of the above described first arrangement will now be described by referring to the drawing. Fig. 2 is a diagram showing operation of the single-phase half bridge converter circuit. In this single-phase half bridge converter circuit, the voltage error signal obtained by amplifying the difference between the actual output voltage and the desired output voltage 8 is first generated. Furthermore, the sine wave reference waveform signal obtained by full-wave rectifying the AC voltage after the noise filter 2 is generated. These signals are multiplied. The amplified output voltage error signal, in which the amplitude of its sine wave corresponds to the output voltage error, is generated.

The amplified output voltage error signal is compared with the actual current signal converted into a voltage and detected by the current detection shunt resistor 6, and the amplified current error signal obtained by amplifying the error between them is generated. The amplified current error signal is compared with the triangular wave 13, and the PWM drive signal having the carrier frequency of 20 kHz is generated. The semiconductor switching element PWM drive circuit 15 switches the semiconductor switching elements 5a and 5b according to the PWM drive signal. As a result, the semiconductor switching elements 5a and 5b are PWM-switched simultaneously so that the power factor will become nearly unity, and so that the actual output voltage will become the desired output voltage 8.

Fig. 3 is diagram showing a flow of an input current of the single-phase half bridge converter circuit according to the first arrangement in the case where the AC power source voltage is positive. Fig. 4 is diagram showing a flow of an input current of the single-phase half bridge converter circuit according to the first arrangement in the case where the AC power source voltage is negative. When the AC power source voltage is positive and the semiconductor switching elements 5a and 5b are on, a short circuit current flows through a loop that starts with the R line of the AC power source of the noise filter 2, passes through the reactor 3, the semiconductor switching element 5a, the current detection shunt resistor 6, and the diode 4d, and ends with the S line of the AC power source of the noise filter 2, and energy is stored across the reactor 3.

Furthermore, when the AC power source voltage is positive and the semiconductor switching elements 5a and 5b are off, a current flows through a loop that starts with the R line of the AC power source of the noise filter 2, passes through the reactor 3, the diode 4a, the smoothing capacitor 7, the current detection shunt resistor 6, and the diode 4d, and ends with the S line of the AC power source of the noise filter 2, and the smoothing capacitor 7 is charged. At this time, energy stored across the reactor 3 is output to the smoothing capacitor 7 side, and boosting of the DC output voltage is conducted. When the AC power source voltage is negative and the semiconductor switching elements 5a and 5b are on, a short circuit current flows through a loop that starts with the S line of the AC power source of the noise filter 2, passes through the semiconductor switching element 5b, the current detection shunt resistor 6, the diode 4c and the reactor 3, and ends with the R line of the AC power source of the noise filter 2, and energy is stored across the reactor 3.

Furthermore, when the AC power source voltage is negative and the semiconductor switching elements 5a and 5b are off, a current flows through a loop that starts with the S line of the AC power source of the noise filter 2, passes through the diode 4b, the smoothing capacitor 7, the current detection shunt resistor 6, the diode 4d and the reactor 3, and ends with the R line of the AC power source of the noise filter 2, and the smoothing capacitor 7 is charged. At this time, energy stored across the reactor 3 is output to the smoothing capacitor 7 side, and boosting of the DC output voltage is conducted. This operation is repeated. The average current becomes a sine wave, and improvement of the power factor and suppression of harmonics are thus conducted. Furthermore, since a current in any current loop flows through the current detection shunt resistor 6, a voltage drop depending upon the actual current is generated across the current detection shunt resistor 6.

As described above, according to the first arrangement, the current detection shunt resistor 6 is provided between the diode bridge circuit 4 and the output N. Instead of conducting current detection by using a current transformer (CT), current detection is conducted by using a small-sized inexpensive current detection shunt resistor 6. By using a result of the detection as one of control parameters, the semiconductor switching elements 5a and 5b are controlled to conduct the power factor improvement, suppression of the harmonics of the power source, and DC voltage adjustment. Therefore, it is possible to reduce the size of the board and reduce the cost. This single-phase half bridge converter circuit becomes effective when applied to home electric appliances in which a circuit board (electric component) must be housed in a narrow space, such as air conditioners.

According to an embodiment of the present invention, reactors are provided on both the R line and the S line of the AC power source to remove the common system noise in the first arrangement. Fig. 5 is a diagram showing a configuration of a single-phase half bridge converter circuit according to an embodiment of the present invention. The basic configuration is the same as the first arrangement. The same parts as those of Fig. 1 are denoted by like characters, and description thereof will be omitted. Only the parts that are different will be described. Instead of the reactor 3 in the first arrangement, reactors 3a and 3b are provided respectively on the R line and S line of the AC power source in the single phase half bridge converter circuit. Furthermore, instead of the noise filter 2 in the first arrangement, the noise filter 2a, which is simpler in configuration, small in size, and low in price, is provided.

Fig. 6 is a diagram showing a configuration of the reactors 3a and 3b that, when used in the circuit shown in Fig. 5 is not in accordance with the present invention. The reactors 3a and 3b have such a structure that the same number of turns of a copper wire are wound around cores each having a high relative permeability. The reactors 3a and 3b have such specifications that magnetic saturation is not caused up to the maximum current flowing through the reactors 3a and 3b and the reactance is not lowered remarkably. Furthermore, each of the reactors 3a and 3b has a noise attenuation characteristic of up to approximately 30 MHz (has a noise reduction characteristic of up to a legal regulation frequency range of the noise terminal voltage of the air conditioner) . Besides the function of storing and supplying energy, the reactors 3a and 3b have a function of preventing flow out of noise. As a result, the noise filter 2a can be reduced in cost and size.

Operation of the firstembodiment will now be described. When the semiconductor switching elements 5a and 5b are on in the operation of the firstembodiment, a short circuit current flows through the single-phase half bridge converter circuit and energy is stored across the reactors 3a and 3b. On the other hand, when the semiconductor switching elements 5a and 5b are off, the energy across the reactors 3a and 3b is output to the smoothing capacitor 7 side. By repeating the operation, boosting of the DC output voltage, improvement of the power factor, and suppression of the harmonics are conducted. Furthermore, concurrently with this operation, removal of the common system noise is conducted by the reactors 3a and 3b. By the way, other operations are the same as those of the first arrangement, and consequently description thereof will be omitted.

According to the firstembodiment, the reactors 3a and 3b are provided respectively on the R line and the S line of the AC power source extending from the noise filter 2a, as described above. Therefore, the noise filter 2a can be small-sized and inexpensive. As a result, the size of the board can be further reduced, and the cost can be further reduced. This single-phase half bridge converter circuit becomes effective when applied to home electric appliances, in which a circuit board (electric component) must be housed in a narrow space, such as air conditioners.

Furthermore, cores of the two reactors can be shared. Fig. 7 is a diagram showing an example of the configuration of the reactor according to the an embodiment. In this example, reactors 3c and 3d having such a structure that the same number of turns of a copper wire are wound around the same core are provided instead of the reactors 3a and 3b. In other words, in this example, the same number of turns of copper wire are wound around a loop shaped core having a high relative magnetic permeability so as to implement such an additive connection that magnetic flux of the reactor 3c and magnetic flux of the reactor 3d are added together.

Thus the two reactors 3c and 3d share a core. Therefore, one shared core need only be provided. Furthermore, as compared with the case where two such separate reactors 3a and 3b having no interlinkage in magnetic flux are provided, the total inductance can be increased and the number of turns can be reduced. Therefore, the reactors 3c and 3d can be reduced in size, and the size of the board can be further reduced. Such a configuration using the reactors 3c and 3d that share the core can also be applied to the case where the current detection shunt resistor 6 is not provided but the CT is used as in the prior technique as shown in Fig. 8. The size and the cost of the noise filter 2a can be reduced, and the size of the reactors 3c and 3d can be reduced.

According to an embodiment of the present invention, a part or all of the single-phase half bridge converter circuit in the first arrangement or the firstembodiment is molded with insulating resin and integrated into one module. Fig. 9 is a diagram showing a configuration of a single-phase half bridge converter circuit according to an embodiment of the present invention. By the way, its basic configuration is the same as that of the first arrangemnt and the above described embodiment. Therefore, the same components as those of Fig. 5 are denoted by like characters, and description thereof will be omitted. Only the parts that are different will now be described.

This single-phase half bridge converter circuit is obtained from the single-phase half bridge converter circuit of the first arrangement and the above described embodiment by connecting the diode bridge circuit 4, the semiconductor switching elements 5a and 5b, and the current detection shunt resistor 6, which are electronic components through which large currents flow, with a lead frame 43, which is sufficiently thick in wire thickness as compared with the thin film wiring, molding them with insulating resin, and thus integrating them into one module 42. This module 42 is attached to a circuit board via board attachment terminals 41a to 41g. By the way, operation of this embodiment is similar to the operation of the first arrangement and the first embodiment. Therefore, description thereof will be omitted.

According to the second embodiment, the diode bridge circuit 4, the semiconductor switching elements 5a and 5b, and the current detection shunt resistor 6 are molded with insulating resin and integrated into one module 42, as described above. As compared with the case where they are arranged on the thin film wiring board, the size of the board can be further reduced. The second embodiment can be utilized effectively for such products that a high voltage and a large current of approximately AC 100 to 240 V, 20 A, and DC 400 V are used and electric components must be housed in a narrow space, such as home electric appliances like air conditioners. Thin film wiring corresponding to AC 100 to 240 V, 20 A, and DC 400 V needs a wide pattern width, a long creepage distance and a long space distance. By forming a module, however, these constraints are eliminated and it is possible to reduce the size.

Furthermore, since the circuit loop area and wiring length become small, it becomes possible to constrain the radiated noise caused by wiring inductance and false operation caused by the radiated noise. Furthermore, it is also possible to mount the current detection shunt resistor 6 outside, without taking it into the module. It is also possible to easily set the current detection level by altering the resistance value of the current detection shunt resistor 6. Furthermore, control circuits, such as the power source synchronization circuit 10, the output voltage error amplifier 9, the multiplier 11, the current error amplifier 12, the comparator 14, and the semiconductor switching element PWM drive circuit 15, are also housed in the module to further reduce the size.

In the converter apparatus according to the present invention, the reactor is divided into parts and the parts are connected in parallel. Thereby, the size of the individual parts are made so small as to be able to be mounted on the board. By connecting the parts to the main circuit board without lead wires, the radiated noise and working dispersion can be reduced. By sealing the reactor, and a thermal conductive board, having a radiator, on which semiconductor switching elements are mounted, with a material, such as resin or gel, having good thermal conductivity and insulation property, the reactor is also cooled by using the radiator for the semiconductor switching elements. Furthermore, by mixing an EMC (Electric Magnetic Compatibility) countermeasure material or a material for improving the thermal conductivity into a material of resin or gel for sealing the reactor, it is possible to reduce radiated noise generated from the circuit loop of the sealed power factor improving converter apparatus and improve the radiation property.

Hereafter, a third embodiment of the present invention will be described by referring to Fig. 10 to Fig. 12. By the way, disposition of the electric component box in the outdoor machine and disposition of the outdoor fan and so on are the same as those of the prior technique shown in Fig. 17. The same characters as those of the prior technique denote the same or corresponding components, and description thereof will be omitted. Fig. 10 is an example of a schematic sectional view showing a converter apparatus of the present invention. Fig. 11 shows a simplified circuit diagram of an air conditioner having a converter apparatus of an embodiment of the present invention mounted thereon. Fig. 12 is an assembly diagram of a converter apparatus of an embodiment of the present invention.

As shown in Fig. 10, semiconductor switching elements 101 and diodes 116 of a converter section shown in Fig. 11 are mounted on a thermal conductive board 114 by soldering. A case 117 of insulating resin is formed so as to take the shape of a box with a thermal conductive board 114 serving as a bottom face. The radiator 105 is adhered closely to the thermal conductive board 114 by setting screws 118. Reactors 102 reduced in size up to the board mounting size by division are mounted on a reactor board 119, and disposed over the thermal conductive board 114 in a layer form. Fixing of the thermal conductive board 114 to the board 119 and electrical connection thereof to the board 119 are conducted by using connection means, such as bus bars, taken out in a direction perpendicular to the board.

Furthermore, the space between the thermal conductive board 114 and the reactor board 119 is filled with a substance 115, such as resin or gel, having a high thermal conductivity and insulation property, and formed so that heat of the reactors 102 may be radiated by using the radiator 105. Furthermore, it is also possible to improve the thermal conductivity by mixing a filler such as alumina into a substance such as resin or gel. Further over the reactor board 119, a control board 121 is disposed. The semiconductor switching elements 101 and the like are mounted on the control board 121, and connected in the same way by using connection means such as bus bars and connectors. The top is hermetically sealed by insulating resin, and AC power source input terminals, output terminals, and control interface terminals are attached as external terminals 122.

In a control circuit according to an embodiment of the present invention, the reactor 102 is divided into four parts and semiconductor switching elements 101 are also connected to the reactors 102, respectively, as shown in Fig. 11. If the reactor is divided into four parts in an air conditioner having a peak input current of approximately 30 A, the peak value of a current flowing per part can be limited to 8 A or less. Therefore, the reactor size can be made so small that the reactors may be mounted on the board, and a general purpose machine winding reactor can also be selected. Even if the number of reactors in use increases, the cost can be made lower than that of one reactor for large current, resulting in a merit. Furthermore, it also becomes possible to select the number of reactors in use according to machine kinds differing in input current value.

As for the semiconductor switching elements 101 (MOS-FETs) mounted on the thermal conductive board 114, general purpose components of surface mounting type for large current exceeding ten and several A are few. In the case of the input current of 30 A peak, therefore, one semiconductor switching element 101 or two semiconductor switching element 101 connected in parallel are provided for each reactor 102 as shown in Fig. 11. Furthermore, besides the semiconductor switching elements 101, heat generating components, such as current detection shunt resistors 123, other than the semiconductor switching elements 101, and components, such as a gate resistor 124 and a temperature sensor 125, desired to be disposed in the vicinity for driving and protecting the semiconductor switching elements 101 are also mounted on the thermal conductive board 114. If hereafter a surface mounting semiconductor switching element (MOS-FET) for larger current is put to general use, or if a semiconductor switching element, such as an IGBT, having a general purpose component up to 50 A class is used, then it is not necessary to provide a semiconductor switching element for each reactor, the number of elements of the converter section can be reduced, and semiconductor switching elements of the inverter section can be mounted in a formed space. Thus, all of the main circuit of the air conditioner can be mounted on the thermal conductive board of nearly the same size, and the size of the board can be reduced.

As shown in Fig. 12, a reactor board 119 is inserted to inside of a box shaped insulating resin case 117, and then the inside is filled with a substance, such as resin or gel, having high thermal conductivity and insulation property. In the case of the gel substance, it is also possible to previously fill the inside of the insulating resin case 117 with the gel substance and insert the reactor board 119 afterward. Furthermore, in such a converter apparatus that the power factor improvement is conducted by the semiconductor switching elements 101, the semiconductor switching elements 101 make the current and voltage changes steep. Therefore, high frequency voltage vibration occurs, and intense radiated noise is caused by using a circuit loop of the main circuit section shown in Fig. 11 as an antenna. In the converter apparatus of the present invention, the circuit loop becomes small by integration and the radiated noise is suppressed. In addition, by mixing an EMC countermeasure material, such as ferrite or alumina, having an effect of suppressing the radiated noise into the substance 115 of the resin or gel into which the reactors 102 and the circuit of the converter section are sealed, the radiated noise can be suppressed remarkably.

The control board 121 disposed over the reactor board 119 has a circuit for PWM-controlling the semiconductor elements 101 so as to improve the power factor, suppress the harmonics, and implement an arbitrary bus bar voltage, and a control interface circuit with the outside. The control board 121 is connected to the top board of high conductivity having external connection terminals and the semiconductor switching elements mounted thereon, with bus bars and connectors. Furthermore, instead of providing the control board separately, it is also possible to incorporate the control circuit onto the reactor board and implement a converter apparatus having a two stage configuration of the board having high thermal conductivity and the reactor board.

In such a refrigeration cycle that a compressor 131, a condensation heat exchanger 132, a diaphragm apparatus 133, an evaporation heat exchanger 134 shown in Fig. 14 are connected one after another, it is now assumed that a converter apparatus of the present invention is used in a converter/inverter apparatus for controlling a drive motor of the compressor 131. In this case, a refrigeration cycle apparatus reduced in noise, vibration and radiated noise can be obtained. Especially if the coolant used in the refrigeration cycle is changed from the conventional R22 coolant of the HCFC family, which destroys the ozone layer, to R410A, R407C or R32 of the HFC family, which does not destroy the ozone layer, or a coolant that is higher in pressure than R22, such as R6000A of the HC family, then the input power to the compressor tends to increase, and consequently the influence of the radiated noise becomes great. By connecting a plurality of reactors in parallel as in the present invention, however, it becomes possible to shorten the length of wiring, such as the lead wires 3, through which the main current flows. Thus, a converter apparatus that is reduced in radiated noise and that is suitable for substitute coolant can be obtained.

A fifth embodiment of the present invention will now be described by referring to Fig. 13. Fig. 13 is an example of a schematic sectional view showing a converter apparatus of a preferred embodiment the present invention.

As shown in Fig. 13, semiconductor switching elements 101, diodes 116, and reactors 102 reduced in size by division so as to be able to be mounted on the board are mounted on a thermal conductive board 114. A case 117 of insulating resin is formed so as to take the shape of a box with a thermal conductive board 114 serving as a bottom face. The radiator 105 is adhered closely to the thermal conductive board 114 by setting screws 118. On the thermal conductive board 114, a substance 115, such as resin or gel, having high thermal conductivity and insulation property is filled to such a degree as to hide the reactors 102. Configuration is made so as to be able to radiate the heat of the reactors 102 by using the radiator 105. By mixing an EMC countermeasure material, such as ferrite, into the substance 115 of the resin or gel in the same way as the third embodiment, the radiated noise can be suppressed. Furthermore, by mixing a thermal conductive material such as alumina, radiation of the reactors 102 is promoted. Over the reactors 102, a control board 121 is disposed. By connection means, such as bus bars, taken out in a direction perpendicular to the board, fixing and electrical connection of the board 121 are conducted. The top is hermetically sealed by insulating resin, and AC power source input terminals, output terminals, and control interface terminals are attached as external terminals 122. As a result, a converter apparatus having a performance similar to that of the third embodiment can be obtained.

As heretofore described, according to the present invention, the current detector is provided between a bridge circuit and a negative side output terminal. The control unit does not conduct current detection by using a current transformer (CT), but conducts current detection by using a small-sized inexpensive current detector. By using a result of this detection as one of control parameters, the switching elements are controlled to conduct power factor improvement, power supply harmonic suppression, DC voltage adjustment, and so on. As a result, there is brought about an effect that the board size can be reduced and the cost can be reduced.

Furthermore, the two switching elements are simultaneously switched. As a result, the power factor becomes approximately unity. In addition, the actual output voltage becomes desired output voltage. Accordingly, there is brought about an effect that the board size can be reduced and the cost can be reduced.

Furthermore, two reactors are respectively provided on two AC side input lines suppress common system noise. As a result, the noise filter can be made small-sized and inexpensive. Accordingly, there is brought about an effect that the board size can be reduced and the cost can be reduced.

Furthermore, the two reactors share a core. As a result, only one shared core is needed. In addition, as compared with the case where two separate reactors having no interlinkage in magnetic flux are provided, the total inductance can be increased and the number of turns can be decreased. As a result, there is brought about an effect that the reactor can be reduced in size and the board size can be reduced.

Furthermore, the bridge circuit, the first switching element, and the second switching element are molded with insulating resin and integrated into one module. As a result, there is brought about an effect that the board size can be further reduced.

According to the single-phase converter circuit according to the next invention, two reactors sharing a core are provided respectively on two AC side input lines and common system noise is suppressed. As a result, the noise filter can be made small-sized and inexpensive by using a small-sized reactor. Thus, there is brought about an effect that the board size can be reduced and the cost can be reduced.

According to the converter apparatus according to the next invention, reactors used for suppression of harmonics and power factor improvement are disposed on or near a thermal conductive board having semiconductor elements mounted thereon and having a radiator, a space between the reactors and the thermal conductive board is filled with a substance such as resin or gel having high thermal conductivity and insulation property, and thereby the reactors can also be cooled by means of thermal conduction by the radiator for cooling the semiconductor elements. It is possible to relax the disposition constraint of the reactors and suppress the temperature rise of the electric component box. Furthermore, there is brought an effect that degradation of the soldering portions of the reactors caused by the temperature rise can also be prevented.

Furthermore, by connecting at least two reactors in parallel, the peak value of a current which flows through each reactor is suppressed. Thus, the size of the reactor can be made so small as to be mounted on the board, and general purpose reactors can be used. As a result, there is brought about an effect that the radiated noise can be suppressed by size reduction of the main circuit and the cost can be reduced.

Furthermore, a material for improving the thermal conductivity is mixed into a substance such as resin or gel having high thermal conductivity and provided with insulation property. As a result, there is brought about an effect that thermal radiation of the reactors can be improved.

Furthermore, the EMC countermeasure material is mixed into a substance such as resin or gel having high thermal conductivity and provided with insulation property. As a result, there is brought about an effect that radiated noise can be remarkably suppressed in addition to the size reduction of the main circuit.

In the refrigeration cycle apparatus according to the next invention, a temperature detection unit is provided on a board having semiconductor elements mounted thereon and having a high thermal radiation property. As a result, there is brought about an effect that protection against thermal destruction of semiconductor elements can be conducted.

The refrigeration cycle apparatus according to the next invention includes reactors connected in parallel, disposed on or near a thermal conductive board having semiconductor elements and so on mounted thereon, and the converter apparatus for conducting suppression of harmonics and power factor improvement by using semiconductor switching elements, wherein the refrigeration cycle apparatus uses coolant that is higher in pressure than R22 as coolant. In such a refrigeration cycle apparatus, there is brought about an effect that the radiated noise of the refrigeration cycle apparatus can be reduced even if the input power of the compressor is increased by the use of high pressure substitute coolant.

### INDUSTRIAL APPLICABILITY

As heretofore described, a single-phase converter circuit according to the present invention is useful for reducing the board size and cost. Since semiconductor switching elements are PWM-controlled, the single-phase converter circuit according to the present invention is suitable for conducting the power factor improvement, power supply harmonic suppression, DC voltage adjustment, and so on. Furthermore, according to an inverter apparatus and a refrigeration cycle apparatus, the reactor can be reduced in size enough to be mounted on the circuit board by dividing the reactor into parts and connecting the parts in parallel. It is useful for positively radiating heat with a radiator. It is suitable for relaxing the constraint on arrangement and structure, suppressing the temperature rise in the electric component box, and reducing working dispersion and radiated noise by shortening the lead wires or eliminating the lead wires.

## Claims

1. A refrigeration cycle apparatus comprising:
two reactors on two AC side input lines and connected in parallel; and
a converter apparatus for conducting suppression of harmonics and power factor improvement by using semiconductor switching elements (5a, 5b; 101);
whereby the converter apparatus is a single-phase converter apparatus; and
**characterised in that** the reactors (3c, 3d) are disposed on or above a thermal conductive board (114) having at least semiconductor elements (101, 116) mounted thereon, and used for suppression of harmonics and power factor improvement;
on the thermal conductive board (114) an insulating substance having a thermal conductivity for allowing heat generated by the reactors (3c, 3d) to be radiated by the thermal conductive board (114) is filled to such a degree as to hide the reactors (3c, 3d).
wherein the refrigeration cycle apparatus uses coolant that is higher in pressure than R22 as coolant; and
wherein the reactors (3c, 3d) share a core.

## Patentansprüche

1. Kältekreislaufgerät, umfassend:
zwei Drosseln an zwei wechselstromseitigen Eingangsleitungen und parallel verbunden; und
ein Wandlergerät zum Durchführen von Unterdrückung von Oberschwingungen und Leistungsfaktor-Verbesserung unter Verwendung von Halbleiterschaltelementen (5a, 5b; 101);
wodurch
das Wandlergerät ein Einphasen-Wandlergerät ist; und
**dadurch gekennzeichnet, dass**
die Drosseln (3c, 3d) auf oder über einer wärmeleitenden Platte (114) mit mindestens darauf montierten Halbleiterelementen (101, 116) angeordnet sind und zur Unterdrückung von Oberschwingungen und Leistungsfaktor-Verbesserung verwendet werden;
auf der wärmeleitenden Platte (114) eine Isolationssubstanz mit einer Wärmeleitfähigkeit, um zu gestatten, dass von den Drosseln (3c, 3d) erzeugte Wärme von der wärmeleitenden Platte (114) abgestrahlt wird, zu einem solchen Grad gefüllt ist, dass die Drosseln (3c, 3d) verborgen sind,
wobei das Kältekreislaufgerät als Kältemittel ein Kältemittel verwendet, das im Druck höher ist als R22; und
wobei sich die Drosseln (3c, 3d) einen Kern teilen.

## Revendications

1. Appareil à cycle de réfrigération comprenant :
deux réacteurs présents sur deux lignes d'entrée côté CA et raccordés en parallèle ; et
un appareil convertisseur permettant de mettre en oeuvre une suppression des harmoniques et une amélioration du facteur de puissance en utilisant des éléments de commutation à semi-conducteurs (5a, 5b ; 101) ;
dans lequel
l'appareil convertisseur est un appareil convertisseur monophasé ; et
**caractérisé en ce que**
les réacteurs (3c, 3d) sont agencés sur ou au-dessus d'un panneau thermo-conducteur (114) sur lequel sont montés au moins des éléments à semi-conducteurs (101, 116), et sont utilisés pour une suppression d'harmoniques et une amélioration du facteur de puissance ;
une substance isolante présentant une conductivité thermique permettant à la chaleur générée par les réacteurs (3c, 3d) d'être rayonnée par le panneau thermo-conducteur (114) est répandue sur le panneau thermo-conducteur (114) jusqu'à cacher les réacteurs (3c, 3d),
dans lequel l'appareil à cycle de réfrigération utilise en tant qu'agent réfrigérant un agent réfrigérant dont la pression est supérieure à R22 ; et
dans lequel les réacteurs (3c, 3d) partagent un même coeur.
